# EUROPEAN PATENT APPLICATION

(11) **EP 1 596 372 A1**
(43) Date of publication of application: **16.11.2005**
(21) Application number: 04255243.0
(22) Date of filing: 31.08.2004
(51) Int. Cl.: G11B 5/64, G11B 5/84

(54) **Magnetic recording media**

(30) Priority: 10.05.2004 US 841556
(71) Applicant: Heraeus Inc, Chandler, AZ 85226 (US)
(72) Inventor: Cheng, Yuanda R., Phoenix, AZ 85048 (US); Kennedy, Steven Roger, Chandler, AZ 85226 (US); Racine, Michael Gene, Phoenix, AZ 85044 (US)
(74) Representative: Hill, Justin John

(57) **Abstract**

A method for manufacturing a magnetic recording medium. The method includes the steps of sputtering at least a first underlayer over a substrate layer, where the first underlayer is comprised of a Cr-based alloy, and sputtering at least a first interlayer over the first underlayer, where the first interlayer is comprised of a Co-based alloy. The method further includes the step of sputtering at least a first overlayer over the first interlayer, where the first overlayer is comprised of a Co-based alloy. At least one of the first underlayer, the first interlayer and/or the first overlayer are doped with X, where X is a metal with an oxidation potential of less than -0.6 eV. The at least one of the first underlayer, the first interlayer and/or the first overlayer are reactively sputtered in the presence of oxygen.

## Description

### FIELD OF THE INVENTION

The present invention relates generally to the field of sputtering and, more particularly to magnetic recording media and methods for manufacturing such media. Certain embodiments relate to refining the grain structure of magnetic recording media using nucleating oxide-particle doped thin film materials.

### DESCRIPTION OF THE RELATED ART

The process of sputtering is widely used in a variety of fields to provide thin film material deposition of a precisely controlled thickness with an atomically smooth surface, for example to coat semiconductors and/or to form films on surfaces of magnetic recording media. In the sputtering process, a cathodic sputter target is positioned in a vacuum chamber partially filled with an inert gas atmosphere, and is exposed to an electric field to generate a plasma. Ions within this plasma collide with a surface of the sputter target causing the sputter target to emit atoms from the sputter target surface. The voltage difference between the cathodic sputter target and an anodic substrate that is to be coated causes the emitted atoms to form the desired film on the surface of the substrate.

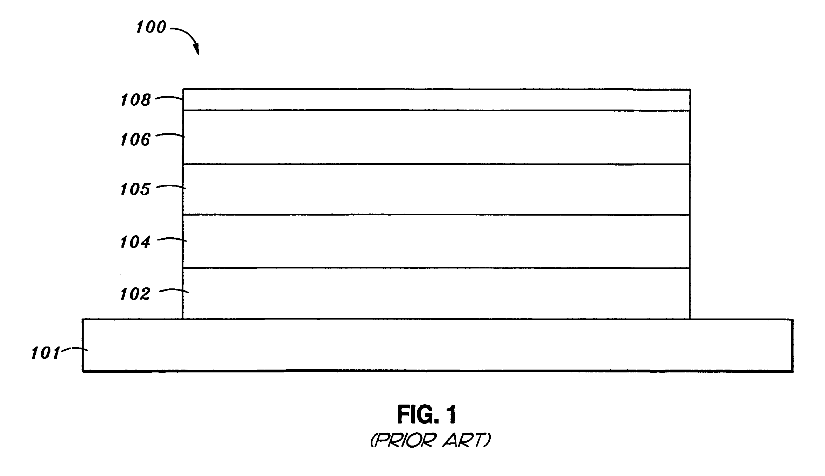

During the production of conventional magnetic recording media, layers of thin films are sequentially sputtered onto a substrate by multiple sputter targets, where each sputter target is comprised of a different material, resulting in the deposition of a thin film "stack." Figure 1 illustrates a typical thin film stack for conventional magnetic recording media. At the base of the stack is non-magnetic substrate 101, which is typically aluminum or glass. Seed layer 102, the first deposited layer, typically forces the shape and orientation of the grain structure of higher layers, and is commonly comprised of NiP or NiAl. Next, a non-magnetic underlayer 104, which often includes one to three discrete layers, is deposited, where the underlayer is typically a chromium-based alloy, such as CrMo, or CrTi. Interlayer 105, which includes one or two separate layers, is formed above underlayer 104, where interlayer 105 is cobalt-based and slightly magnetic. Overlayer 106, which is magnetic and may include two or three separate layers, is deposited on top of interlayer 105, and carbon lubricant layer 108 is formed over overlayer 106.

The amount of data that can be stored per unit area on a magnetic recording medium is inversely proportional to the size of the microstructure of the overlayer. Microstructure size corresponds to the size of a grain of the thin film, where a grain is a collection of molecules typically comprising 20 to 50 atoms. Microstructure uniformity, a measure of the physical segregation of the grains, also contributes to increased data storage potential.

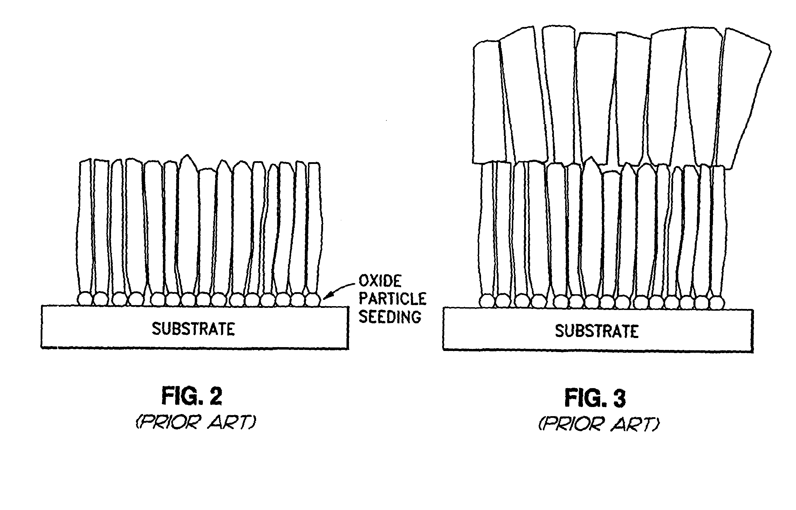

One known technique for refining the grain size, and consequently increasing the storage potential of magnetic recording media, is through the use of oxidic grain nucleation sites at the seed layer. As depicted in Figure 2, an oxide particle deposited as a seed layer on the substrate acts as nucleating sites for subsequently deposited layers, reducing grain size and increasing data storage potential. Due to complexities in the sputter target manufacturing process, it is difficult to add oxides to a cast target, since the oxide particles are liberated from a parent metal during the melting and casting process. An alternate method of depositing an oxide particle film on a substrate to reduce grain size is therefore quite desirable.

U.S. Patent Nos. 6,524,724 and 6,620,531 are seen to describe techniques for reducing grain size at the overlayer by depositing an oxide particle film as a seed layer, below the underlayer. As depicted in Figure 3, as additional thin film layers are deposited on an oxide-particle enriched seed layer and the distance from the seed layer increases, grain size in the additional layers also increases, and physical segregation between the grains decreases. Using these oxide particle seeding techniques, grain size at the underlayer may be reduced, but grain size at the overlayer tends to be markedly larger. Accordingly, conventional techniques for reducing grain size may have a beneficial effect on layers of the thin film stack adjacent to the seed layer, but the beneficial effect of oxide-doping the seed layer is mitigated in the overlayers, where grain size is most crucial.

This invention seeks to provide improved magnetic recording media and methods for manufacturing same.

### SUMMARY OF THE INVENTION

The amount of data that can be stored per unit area on magnetic recording media corresponds to the grain density of the magnetic overlayer. Although nucleating oxide particles have been shown to effectively refine the microstructure of a thin film near the seed layer, several problems remain. In this regard, certain embodiments of the present invention address disadvantages found in conventional sputter targets and sputter target manufacturing methods, particularly with those disadvantages which relate to the deposition of oxide-doped thin films and the densification of grains at the magnetic overlayer of a magnetic recording medium.

According to one aspect, the present invention is a magnetic recording medium. The magnetic recording medium includes a substrate, and at least a first underlayer formed over the substrate, where the first underlayer is comprised of a Cr-based alloy, such as CrMo or CrTi. The magnetic recording medium also includes at least a first interlayer formed over the first underlayer, where the first interlayer is comprised of a Co-based alloy, and at least a first overlayer formed over the first interlayer, where the first overlayer is magnetic and is comprised of a Co-based alloy. At least one of the first underlayer, the first interlayer and/or the first overlayer are doped with an X-oxide, where X is a metal with an oxidation potential of less than -0.6 eV.

A magnetic recording medium embodying the present invention includes a refined microstructure with nucleating oxide sites contained within the thin film stack, where the thin film is sputtered from oxide-doped sputter target. Grain refinement can be applied to all layers of the magnetic stack, including any layer or layers of the underlayer, interlayer, and/or overlayer. In each of these cases, nucleation sites can be sputtered on as a "flash" seed layer, which refines thin films which are to be sputtered above, or the nucleation sites may be contained within the thin films themselves. This type of refinement can be used for standard longitudinal media, vertical media, and anti-ferromagnetically-coupled ("AFC") media, increasing storage density in most instances.

A lubricant layer is formed over the first overlayer, where the lubricant layer is comprised of C or a C-based alloy. The lubricant layer protects the overlayer from damage caused by physical contact between a read-write head and the overlayer itself, which may be spinning at thousands of rotations per minute.

A seed layer is formed between the substrate and the first underlayer. A seed layer may be able to further reduce grain size and effectuate a uniform physical segregation of grains, by forcing the shape and orientation of the grain structure of subsequently deposited layers. A typical seed layer is comprised of NiP or NiAl.

The at least one of the first underlayer, the first interlayer and/or the first overlayer comprise less than 4 At% X-oxide. One advantage of the present invention is that the nucleating oxide material need only comprise up to a small atomic percentage of the thin film, ensuring that physical properties of the thin film metal or alloy are otherwise not affected.

X is a metal with a high oxidation potential, selected from the group consisting of Li, Na, K, Ca, Sr, Mg, Sc, Y, La, Ti, Zr, V, Nb, and Mn. The overall effect of the dopants and grain growth stunting is the same for each layer in the stack which contains the nucleating oxide materials. In the situation where X-oxide doped sputter targets are used to sputter nucleating oxide materials, the sputter chamber needs no additional oxygen atmosphere, since the oxide is deposited alongside the parent metal or alloy, forcing grains to nucleate more readily and in greater numbers.

According to a second aspect of the present invention, a magnetic recording medium is manufactured by sputtering at least a first underlayer over a substrate layer, where the first underlayer is comprised of a Cr-based alloy, and sputtering at least a first interlayer over the first underlayer, where the first interlayer is comprised of a Co-based alloy, such as CoCrTa. Furthermore, the magnetic recording medium is manufactured by sputtering at least a first overlayer over the first interlayer, where the first overlayer is magnetic and is comprised of a Co-based alloy, such as CoCrPtB. At least one of the first underlayer, the first interlayer and/or the first overlayer are doped with X, where X is a metal with an oxidation potential of less than -0.6 eV. The at least one of the first underlayer, the first interlayer and/or the first overlayer are reactively sputtered in the presence of oxygen.

Reactive sputtering is a deposition process in which species sputtered off the target material are chemically reacted with other species in the gas mixture to form a compound to be deposited, such as the case where Si is sputtered in plasma containing oxygen, resulting in the deposition of SiO₂. Using the manufacturing method of the present invention, a sputter target comprising a metal with a high oxidation potential is sputtered into a fine-grained oxide in a thin film, using either ambient, latent oxygen found naturally in the sputter chamber, or with controlled amounts of oxygen released into the chamber. The resulting deposited thin film has a refined grain size, enabled by the presence of fine oxide particles within the thin film.

According to a third aspect of the present invention, a magnetic recording medium is manufactured by sputtering at least a first underlayer over a substrate, where the first underlayer is comprised of a Cr-based alloy, and sputtering at least a first interlayer over the first underlayer, where the first interlayer is comprised of a Co-based alloy. Moreover, the magnetic recording medium is manufactured by sputtering at least a first overlayer over the first interlayer, where the first overlayer is magnetic and is comprised of a Co-based alloy. At least one of the first underlayer, the first interlayer and/or the first overlayer are doped with an X-oxide, where X is a metal with an oxidation potential of less than -0.6 eV.

According to a fourth aspect, the present invention is a magnetic recording medium. The magnetic recording medium at least a first underlayer formed over a substrate, where the first underlayer is comprised of a Cr-based alloy, such as CrMo or CrTi. The magnetic recording medium also includes at least a first interlayer formed over the first underlayer, where the first interlayer is comprised of a Co-based alloy, and at least a first overlayer formed over the first interlayer, where the first overlayer is magnetic and is comprised of a Co-based alloy. At least one of the first underlayer, the first interlayer and/or the first overlayer are doped with an X-oxide, where X is a metal with an oxidation potential of less than -0.6 eV.

Embodiments of the present invention thus provide a magnetic recording medium with a dense grain structure at the overlayer, to increase potential data storage capabilities. In particular, it is desirable to provide a method for sputtering a thin film stack, where the grain structure is controlled and made uniformly dense on layers of the thin film stack above the seed layer.

In the following description of the preferred embodiment, reference is made to the accompanying drawings that form a part thereof, and in which is shown by way of illustration a specific embodiment in which the invention may be practiced. It is to be understood that other embodiments may be utilized and changes may be made without departing from the scope of the present invention.

### BRIEF DESCRIPTION OF THE DRAWINGS

Referring now to the drawings in which like reference numbers represent corresponding parts throughout:
Figure 1 depicts a typical thin film stack for conventional magnetic recording media;
Figure 2 depicts the effect of conventional oxide particle doping of a seed layer on grain size;
Figure 3 depicts the effect that distance from an oxide particle doped seed layer has on grain size;
Figure 4 depicts a thin film stack according to one aspect of the present invention;
Figure 5 is a flowchart which illustrates a method for manufacturing a magnetic recording medium, according to an additional aspect of the present invention; and
Figure 6 illustrates the effect of reactive sputtering on thin film deposition, using a sputter target doped with a metal with a high oxidation potential sputtered in an oxygen-rich atmosphere.

### DETAILED DESCRIPTION OF THE INVENTION

Embodiments of the present invention allow for increased data storage of a magnetic recording medium by refining the grain size of the overlayer through oxide-particle doping of layers of the thin film stack which are deposited over a seed layer.

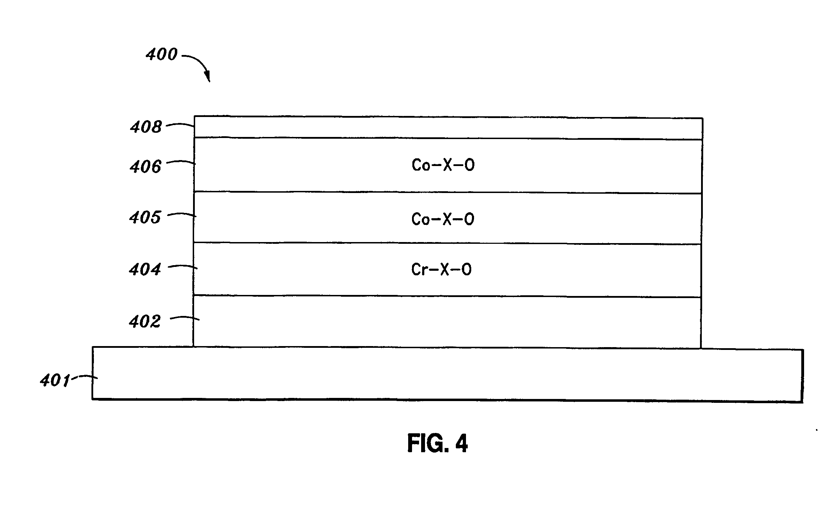

Figure 4 depicts a thin film stack of a magnetic recording medium according to one embodiment of the present invention. Briefly, the magnetic recording medium includes a substrate, and at least one underlayer formed over the substrate, where the underlayer is comprised of a Cr-based alloy, such as CrMo or CrTi. The magnetic recording medium also includes at least one interlayer formed over the underlayer, where the interlayer is comprised of a Co-based alloy, and at least one overlayer formed over the interlayer, where the overlayer is magnetic and is comprised of a Co-based alloy. At least one layer from the underlayer, the interlayer and/or the overlayer is doped with an X-oxide, where X is a metal with an oxidation potential of less than -0.6 eV.

In more detail, magnetic recording medium 400 includes substrate 401, which is typically aluminum or glass. Seed layer 402 is formed over substrate 401, where seed layer 402 forces the shape and orientation of the grain structure of subsequently deposited thin film layers. Typically, seed layer 402 is comprised of NiP or NiAl. In an alternate arrangements of the present invention, seed layer 402 is omitted.

Underlayer 404 is formed over seed layer 402, or over substrate 401 if seed layer 402 is omitted. Although underlayer 404 is depicted as one layer, in an alternate aspect of the present invention underlayer 404 is three layers. Underlayer 404 is comprised of a chromium-based alloy, such as CrMo or CrTi, and may also further comprise an oxide.

Interlayer 405 is formed over underlayer 404. Interlayer 405 is illustrated as one layer, however in an additional arrangement, interlayer 405 is three layers. Interlayer 405 is comprised of a cobalt-based alloy such as CoCrTa, and may also further comprise an oxide. Interlayer 406 is slightly magnetic.

Overlayer 406 is formed over interlayer 405. In Figure 4, overlayer 406 is shown as one layer. In a further additional aspect of the present invention, overlayer 405 is three layers. Overlayer 406 is comprised of a cobalt-based alloy such as CoCrPtB, and may also further comprise an oxide.

Carbon lubricant layer 408 is formed over overlayer 406, where the lubricant layer is comprised of C or a C-based alloy. Carbon lubricant layer 408 protects overlayer 406 from damage caused by physical contact between a read-write head (not depicted) and overlayer 408 itself. In the alternate, carbon lubricant layer 408 is omitted.

At least one layer from underlayer 404, interlayer 405 and/or overlayer 406 is doped with an X-oxide, where X is a metal with a high affinity for oxidation. Metals with a high affinity for oxidation are metals with an oxidation potential of less than -0.6 eV. These metals effectuate the stunting of grain growth by depositing an oxide-doped nucleation site within a thin film. By oxide-doping thin film layers above the seed layer, the beneficial effect of grain growth stunting is not limited to layers which are adjacent to an oxide-doped seed layer.

Table 1 lists several examples of stable and commercially available metals with a high affinity for oxidation. Table 1 is not an exhaustive list, but one of ordinary skill in the art would understand that metals having similar characteristics as those described below may also qualify as metals with a high affinity for oxidation.

**Table 1**

| Element | **Oxidation Potential** (E°/V) |
|---|---|
| Li (to Li⁺) | -1.96 |
| Na (to Na⁺) | -2.71 |
| K (to K⁺) | -2.931 |
| Ca (to Ca²⁺) | -2.868 |
| Sr (to Sr²⁺) | -2.899 |
| Mg (to Mg²⁺) | -2.372 |
| Sc (to Sc³⁺) | -2.077 |
| Y (to Y³⁺) | -2.372 |
| La (to La³⁺) | -2.379 |
| Ti (to Ti²⁺) | -1.630 |
| Zr (to Zr⁴⁺) | -1.45 |
| V (to V²⁺) | -1.175 |
| Nb (to Nb³⁺) | -1.099 |
| Mn (to _{Mn}2+₎ | -1.185 |

The magnetic recording medium includes a dense grain structure with nucleating oxide sites contained within the thin film stack above the seed layer, where the thin film is sputtered from oxide-doped sputter target. Grain refinement can be applied to all layers of the magnetic stack, including any layer or layers of the underlayer, interlayer, and/or overlayer. In each of these cases, nucleation sites can be sputtered on as a "flash" seed layer, which refines thin films which are to be sputtered above, or the nucleation sites may be contained within the thin films themselves. This type of refinement can be used for standard longitudinal media, vertical media, and AFC media, increasing storage density in most instances.

The above-described thin films are deposited on substrate 401 utilizing sputtering processes recognized by those skilled in the material science art, using X-oxide doped sputter targets. Powder metallurgy is used to create these X-oxide doped sputter target, to avoid the problems relating to the liberation of oxygen from a parent metal during melting or casting. Using powder metallurgy, a mass of powder is formed into a shape or "can," then consolidated to form inter-particle metallurgical bonds. In more detail, elemental powders, including an X-oxide powder, are mixed to produce a homogeneous blend, the powders are encapsulated in a metal container, and the container is out-gassed to avoid contamination of the materials by any residual gas. A hot isostatic pressing (HIP) occurs on the container, in which heat and isostatic pressure are applied on the vessel to consolidate the powder, turning loose powder into a densified matter known as a "HIP'ed can." The HIP'ed can is then machined, to create multiple X-oxide doped targets, which are then sputtered.

During sputtering, the oxygen molecules are temporarily liberated from X, and remain within the vacuum chamber. When X deposits as a thin film on the substrate, the liberated oxygen molecules are attracted to X due to the high oxidation potential, and the X-oxide is reformed on the surface of the thin film. In the situation where X-oxide doped sputter targets are used to sputter nucleating oxide materials, the sputter chamber needs no additional oxygen atmosphere, since the oxide is deposited alongside the parent metal or alloy, forcing grains to nucleate more readily and in greater numbers.

X is selected from the group consisting of Li, Na, K, Ca, Sr, Mg, Sc, Y, La, Ti, Zr, V, Nb, and Mn. Metals with a high oxidation potential are more apt to remain in the oxide form, stunting grain grown rather than being absorbed into the totality of the parent phases. The overall effect of the dopants and grain growth stunting is the same for each layer in the stack which contains the nucleating oxide materials.

Metal oxides can be added to existing alloys in quantities ranging from as little as 100 ppm, to several volume percent, depending on the thin film to be sputtered, and the dopant composition. Specifically, some alloys require only minute amounts of dopant to nucleate grains and retard grain growth, while other alloys will require larger quantities of dopant to achieve the same effect. The underlayer, interlayer and/or overlayer or layers which are doped with X-oxide comprise less than 4 At% X-oxide. The overall effect of the dopants and the grain growth stunting is the same for each layer in the stack which contains the nucleating oxide materials.

Grain growth is reduced because of the large numbers of small grains, constraining swelling of each individual grain to under 60Å. Furthermore, nucleating oxide materials have been shown to improve the signal-to-noise ratio ("SNR") of magnetic alloys as a result of better grain isolation, due to oxide particles coating the grain surfaces.

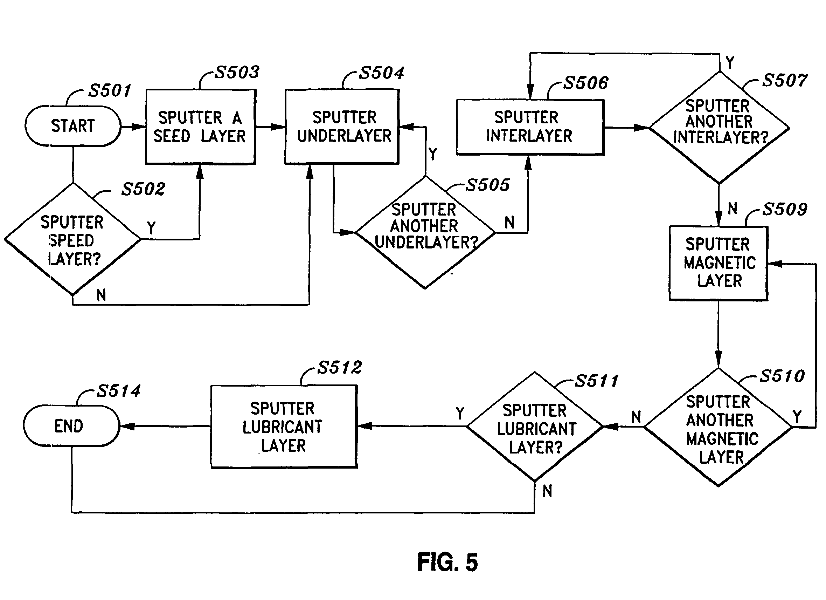

Figure 5 is a flowchart which illustrates a method for manufacturing a magnetic recording medium, according to another aspect of the present invention. Briefly, a magnetic recording medium is manufactured by sputtering at least one underlayer over a substrate layer, where the underlayer is comprised of a Cr-based alloy, and by sputtering at least one interlayer over the underlayer, where the interlayer is comprised of a Co-based alloy. Furthermore, the magnetic recording medium is manufactured by sputtering at least one overlayer over the interlayer, where the overlayer is comprised of a Co-based alloy. At least layer from the underlayer, the interlayer and/or the overlayer are doped with X, where X is a metal with an oxidation potential of less than -0.6 eV. The X-doped layer or layers are reactively sputtered in the presence of oxygen.

In more detail, the manufacturing process begins (step S501), and it is decided whether a seed layer should or should not be deposited (step S502). A seed layer, typically comprised of NiP or NiAl, may be useful to force the shape and orientation of the grain structure of subsequently deposited layers. If a seed layer is desired, the seed layer is sputtered on a substrate (step S503). If a seed layer is not desired, a seed layer is not sputtered, and the process continues to step S504.

An underlayer is sputtered over the seed layer, where the underlayer comprises a Cr-based alloy, such as CrMo or CrTi (step S504). Since thin film stacks often contain up to three underlayers, after the underlayer is sputtered it is decided whether an additional underlayer should or should not be deposited (step S505). If another underlayer is to be deposited, an additional underlayer is sputtered (step S504).

If no more underlayers are to be deposited (step S505), an interlayer is sputtered (step S506). The interlayer is cobalt-based, and slightly magnetic. Since thin film stacks typically include two interlayers, after the interlayer is deposited it is determined whether to deposit an additional interlayer (step S507). If another interlayer is to be deposited, an additional interlayer is sputtered (step S506).

If no more interlayers are to be deposited, a overlayer is sputtered (step S509). Typically, two or three of the cobalt-based overlayers are sputtered for each magnetic recording medium. If another overlayer is to be deposited (step S510), the additional overlayer is sputtered (step S509). Otherwise, it is determined whether a lubricant layer should be deposited (step S511).

If a lubricant layer is desired, the lubricant layer is sputtered (step S512). A lubricant layer is formed over the first overlayer, where the lubricant layer is comprised of C or a C-based alloy. The lubricant layer protects the overlayer from damage caused by physical contact between a read-write had and the overlayer itself, which may be spinning at thousands of rotations per minute. If no lubricant layer is desired, of if a lubricant layer has already been deposited, the process ends (step S514).

At least one layer from the interlayer, the underlayer, and/or the overlayer are doped with X, where X is a metal with an oxidation potential of less than -0.6 eV. The X-doped layer or layers are reactively sputtered in the presence of oxygen.

Reactive sputtering is the deposition process in which a species, such as X, is sputtered off the target material and chemically reacted with other species, such as oxygen, in the gas mixture to form a compound to be deposited. Using embodiments of present invention, a sputter target comprising a metal with a high affinity for oxidation is sputtered into a fine-grained oxide in a thin film, using either ambient, latent oxygen found naturally in the sputter chamber, or with controlled amounts of oxygen released into the chamber. The resulting deposited thin film has a refined grain size, enabled by the presence of fine oxide particles within the thin film. Based on limitations relating to melting and casting technology which make it very difficult to dope alloys with fine oxide powders, embodiments of the present invention facilitate the doping of high oxidation materials in thin films of magnetic recording material.

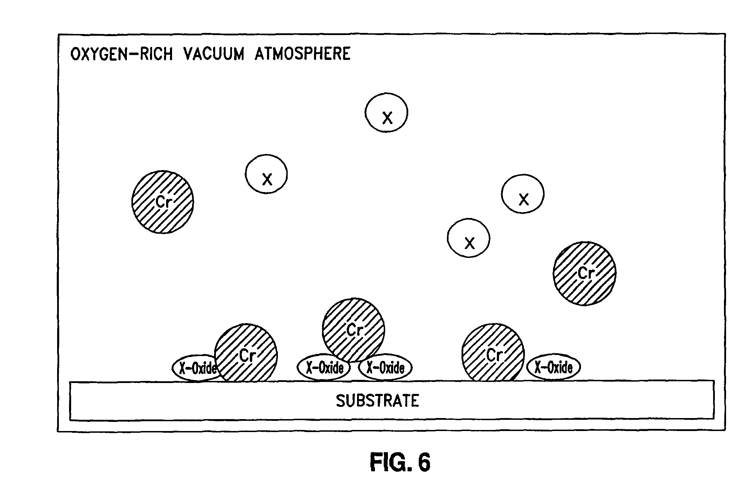

As depicted in Figure 6, one or more metals with high oxidation potential, such as those listed in Table 1, are included in the parent alloy or metal as dopants, in levels of 100 ppm up to several atomic percent. These metals are transformed upon sputtering into a fine-grained oxide form using either ambient, latent oxygen found naturally in small quantities in the sputter chamber, or with controlled amounts of oxygen released into the chamber. The use of latent chamber oxygen or added oxygen will be determined by the type of dopant used, with more easily oxidized metals such as Sr or Ca requiring less oxygen to react.

Layers which are not X-doped may be sputtered using conventional, non-reactive sputtering techniques.

Metals with a high affinity for oxidation or with high oxidation potentials effectuate the stunting of grain growth by depositing an oxide-doped nucleation site within a thin film. By oxide-doping thin film layers above the seed layer, the beneficial effect of grain growth stunting is not limited to layers which are adjacent to an oxide-doped seed layer. Because of these advantages, grain grown is reduced because of the high density of grains, constraining swelling of each individual grain to under 60Å.

At least one layer of the underlayer, the interlayer and/or the overlayer which is doped with X-oxide comprises less than 4 At% X-oxide. In a further preferred aspect, X is selected from the group consisting of Li, Na, K, Ca, Sr, Mg, Sc, Y, La, Ti, Zr, V, Nb, and Mn.

The overall result of this method is a refinement of grain sizes, enabled by the presence of very small nucleating oxide particles, either on the surface of the substrate in a seed layer, or within the parent film itself, containing reactively-formed oxide particles. In the case of Cr underlayer films deposited on a reactively-sputtered, X-doped Cr seed layer, the columnar grains are markedly refined. If the thin film is X-doped, including the reactant inside the parent film, the grain structure may be improved, with the added benefit of improved grain separation, and improved SNR.

According to another aspect of the present invention, a magnetic recording medium is manufactured by sputtering at least one underlayer over a substrate, where the underlayer is comprised of a Cr-based alloy, and sputtering at least one interlayer over the underlayer, where the interlayer is comprised of a Co-based alloy. Moreover, the magnetic recording medium is manufactured by sputtering at least one overlayer over the interlayer, where the overlayer is comprised of a Co-based alloy. At least one layer of the underlayer, the interlayer and/or the overlayer are doped with an X-oxide, where X is a metal with an oxidation potential of less than -0.6 eV.

A lubricant layer is formed over the first overlayer, where the lubricant layer is comprised of C or a C-based alloy. A seed layer is formed between the substrate and the first underlayer. The at least one of the first underlayer, the first interlayer and/or the first overlayer comprise less than 4 At% X-oxide. The overall effect of the dopants and grain growth stunting is the same for each layer in the stack which contains the nucleating oxide materials.

X is selected from the group consisting of Li, Na, K, Ca, Sr, Mg, Sc, Y, La, Ti, Zr, V, Nb, and Mn. These metals effectuate the stunting of grain growth by depositing an oxide-doped nucleation site within a thin film. By oxide-doping thin film layers above the seed layer, the beneficial effect of grain growth stunting is not limited to layers which are adjacent to an oxide-doped seed layer.

According to another aspect, the present invention is a magnetic recording medium. The magnetic recording medium includes at least a first underlayer formed over a substrate, where the first underlayer is comprised of a Cr-based alloy, such as CrMo or CrTi. The magnetic recording medium also includes at least a first interlayer formed over the first underlayer, where the first interlayer is comprised of a Co-based alloy, and at least a first overlayer formed over the first interlayer, where the first overlayer is magnetic and is comprised of a Co-based alloy. At least one of the first underlayer, the first interlayer and/or the first overlayer are doped with an X-oxide, where X is a metal with an oxidation potential of less than -0.6 eV.

The invention has been described with particular illustrative embodiments. It is to be understood that the invention is not limited to the above-described embodiments and that various changes and modifications may be made by those of ordinary skill in the art without departing from the spirit and scope of the invention.

## Claims

1. A magnetic recording medium (400), comprising:
at least a first underlayer (404) formed over a substrate (401), wherein said first underlayer is comprised of a Cr-based alloy;
at least a first interlayer (405) formed over said first underlayer, wherein said first interlayer is comprised of a Co-based alloy; and
at least a first overlayer (406) formed over said first interlayer, wherein said first overlayer is comprised of a Co-based alloy,
wherein at least one of said first underlayer, said first interlayer and/or said first overlayer are doped with an X-oxide, and wherein X is a metal with an oxidation potential of less than -0.6 Electron Volts.

2. A magnetic recording medium according to Claim 1, further comprising:
a lubricant layer (408) formed over said first overlayer (406), said lubricant layer comprised of C or a C-based alloy.

3. A magnetic recording medium according to Claim 1 or 2, further comprising:
a seed layer (402) formed between said substrate (401) and said first underlayer (404).

4. A magnetic recording medium according to Claim 1, 2 or 3, wherein the at least one of said first underlayer (404), said first interlayer (405) and/or said first overlayer (406) comprise less than 4 At% X-oxide

5. A magnetic recording medium according to any preceding claim, wherein X is selected from the group consisting of Li, Na, K, Ca, Sr, Mg, Sc, Y, La, Ti, Zr, V, Nb, and Mn.

6. A method for manufacturing a magnetic recording medium (400), comprising the steps of:
sputtering at least a first underlayer (404) over a substrate, wherein the first underlayer is comprised of a Cr-based alloy;
sputtering at least a first interlayer (405) over the first underlayer, wherein the first interlayer is comprised of a Co-based alloy; and
sputtering at least a first overlayer (406) over the first interlayer, wherein the first overlayer is comprised of a Co-based alloy,
wherein at least one of the first underlayer, the first interlayer and/or the first overlayer are doped with an X-oxide, and wherein X is a metal with an oxidation potential of less than -0.6 Electron Volts.

7. A method for manufacturing a magnetic recording medium according to Claim 6, further comprising the steps of:
sputtering a seed layer (402) on the substrate.

8. A method for manufacturing a magnetic recording medium according to Claim 6 or 7, wherein the at least one of the first underlayer (404), the first interlayer (405) and/or the first overlayer (406) comprise less than 4 At% X.

9. A method for manufacturing a magnetic recording medium according to Claim 6, 7 or 8, wherein X is selected from the group consisting of Li, Na, K, Ca, Sr, Mg, Sc, Y, La, Ti, Zr, V, Nb, and Mn.

10. A method for manufacturing a magnetic recording medium (400) according to any of Claims 6-9, wherein the at least one of the first underlayer (404), the first interlayer (405) and/or the first overlayer (406) are reactively sputtered in the presence of oxygen.
